(19) Europäisches Patentamt
European Patent Office
Office européen des brevets

(11) **EP 2 418 607 A1**

(12) **EUROPÄISCHE PATENTANMELDUNG**

(43) Veröffentlichungstag:
**15.02.2012 Patentblatt 2012/07**

(51) Int Cl.:
***G06K 19/067*** *(2006.01)* ***G06K 7/08*** *(2006.01)*

(21) Anmeldenummer: **10075337.5**

(22) Anmeldetag: **05.08.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO SE SI SK SM TR**
Benannte Erstreckungsstaaten:
**BA RS**

(71) Anmelder: **Printechnologics GmbH**
**09112 Chemnitz (DE)**

(72) Erfinder:
• **Kreutzer, André**
**09648 Mittweida (DE)**

• **Förster, Matthias**
**01307 Dresden (DE)**
• **Franz, Thoralt**
**08297 Zwönitz/OT Brünlos (DE)**
• **Thiele, Jan**
**09127 Chemnitz (DE)**
• **Voigt, Sascha**
**09337 Bernsdorf (DE)**

(74) Vertreter: **Boeckh, Tobias**
**HERTIN**
**Anwaltssozietät**
**Kurfürstendamm 54/55**
**10707 Berlin (DE)**

(54) **Kapazitiver Datenträger und System zur Erfassung von Informationen**

(57) Die Erfindung beschreibt einen kapazitiven Informationsträger, bei dem auf einem elektrisch nicht leitfähigen Substrat mindestens eine elektrisch leitfähige Touch-Struktur angeordnet ist. Weiterhin umfasst die Erfindung ein System und Verfahren zur Erfassung von Informationen bestehend aus einem kapazitiven Informationsträger, einem kapazitiven Flächensensor, einem Kontakt zwischen beiden Elementen und einer Wechselwirkung, welche die Touch-Struktur des Informationsträgers für ein mit dem Flächensensor verbundenes Datenverarbeitungssystem auswertbar macht und mit dem Informationsträger assoziierte Ereignisse auslösen kann.

EP 2 418 607 A1

**Beschreibung**

Die Erfindung beschreibt einen kapazitiven Informationsträger, bei dem auf einem elektrisch nicht leitfähigen Substrat mindestens eine elektrisch leitfähige Touch-Struktur angeordnet ist. Weiterhin umfasst die Erfindung ein System und Verfahren zur Erfassung von Informationen bestehend aus einem kapazitiven Informationsträger, einem kapazitiven Flächensensor, einem Kontakt zwischen beiden Elementen und einer Wechselwirkung, welche die Touch-Struktur des Informationsträgers für ein mit dem Flächensensor verbundenes Datenverarbeitungssystem auswertbar macht und mit dem Informationsträger assoziierte Ereignisse auslösen kann.

Im Sinne der Erfindung ist ein Informationsträger insbesondere ein Medium zum Speichern, Abbilden, Hinterlegen und/oder Zuordnen von Informationen.

Im Sinne der Erfindung ist ein kapazitiver Flächensensor insbesondere eine physikalische Schnittstelle zur Erfassung von elektrischen Kapazitäten und/oder Kapazitätsunterschieden innerhalb von Teilbereichen einer definierten Fläche. Flächensensoren beinhaltende Geräte umfassen beispielsweise Smartphones, Handys, Displays, Tablet-PCs, Tablet-Notebooks, Tochpad-Geräte, Grafiktabletts, Fernseher, PDAs, MP3-Player, Trackpads und/oder kapazitive Eingabegeräte. Ein solcher Flächensensor kann beispielsweise auch Bestandteil von Eingabegeräten als Touchscreen, Touchpad oder Grafiktablett sein. Touchscreens sind auch als Tastschirm oder Sensorbildschirm bekannt. Derartige Eingabegeräte werden unter anderem in Smartphones, PDAs, Touchdisplays oder Notebooks eingesetzt.

Bekannte Lesegeräte oder Apparate zum Erfassen und Lesen von kapazitiven Informationen stellen einzelne Geräte dar, welche diese und nur genau diese Bestimmung haben. Nachteile der im Stand der Technik offenbarten Lesegeräten oder Apparate sind, dass für die einzelnen Anwendungen immer eigenständige kapazitive Lesegeräte verfügbar sein müssen und diese oft über eine Schnittstelle mit Daten verarbeitenden Medien verbunden sind. Die Verbreitung und Akzeptanz der Lesegeräte ist dadurch relativ schlecht und mit Mehrkosten durch die Anschaffung der Lesegeräte verbunden. Zudem ist die Verknüpfung real gedruckter Informationen mit digitalen Informationen sehr schlecht realisierbar. Eine Möglichkeit stellen Barcodes dar, welche mittels geeigneten Scannern oder Kameras erfasst werden und digitale Inhalte aufrufen können. Nachteilig bei den bekannten Barcodes ist, dass sie mit den systemtypischen Handicaps verbunden sind und z. B.: Informationen beliebig oft kopierbar sind, optisch Platz auf Produkten oder Werbeträgern einnehmen, schlecht in ausreichend guter Qualität individualisierbar sind, es einer direkten Sichtverbindung zwischen Code und Erfassungseinheit bedarf, welche durch Schmutz, Kratzer, Lichtverhältnisse etc. eine korrekte Erfassung und Auslesung der Information erschweren oder komplett verhindern. Bisherige bekannte kapazitive Datenträger überbrücken innerhalb eines Lesegerätes immer zwischen (mindestens) einer Lese- und einer Empfangselektrode. Abhängig vom Vorhandensein oder Nichtvorhandensein einer kapazitiven Struktur wird eine logische "1" bzw. "0" erkannt.

Der Stand der Technik zeigt mehrere Möglichkeiten auf, mittels Drucktechniken oder anderen Beschichtungsverfahren Informationsträger herzustellen, welche mittels geeignetem Leseverfahren bzw. Lesegerät ausgelesen werden können. Die wohl am meisten verbreiteten derart hergestellten Informationsträger sind Barcodes in der Ausführung als eindimensionaler Strichcode oder beispielsweise als zweidimensionale Varianten. Diese werden mit geeigneten optischen Scannern erfasst und gegebenenfalls über entsprechende Datenverarbeitungssysteme weiterverarbeitet.

Die Drucktechniken und Beschichtungstechniken zur Herstellung solcher Merkmale entwickeln sich ebenso weiter. So beschreibt die EP 1 803 562 ein Verfahren zum Transfer von bildgebenden Schichten von einer Trägerfolie bzw. Transferfolie auf Druckbogen in einer bogenverarbeitenden Maschine. Dabei wird in einem ersten Auftragswerk ein Kleber aufgebracht und in einem weiteren Beschichtungswerk mit einer Transferfolie zusammengefahren und Material von der Transferfolie durch Anhaftung auf die Druckbogen aufgebracht. Dabei wird in dem Beschichtungswerk ein Transferspalt gebildet und die Transferfolie an der Oberfläche einer Presswalze entlang mit der mit Transfermaterial beschichteten Seite auf einem Druckbogen aufgelegt und unter Druck gemeinsam mit diesem durch den Transferspalt geführt, so dass die bildgebenden Schichten in mit Kleber versehenen Bereichen von der Trägerfolie auf den Druckbogen haftend übertragen werden. Damit können ohne weiteres Barcodes und alphanumerische Informationen aufgebracht werden.

Im Stand der Technik werden weiterhin in US 5,818,019, US 3,719,804, US 4,587,410 und US 2006/0118612 flächige gedruckte Materialien offenbart, die eine sichere Verifikation oder Validierung von Daten erlauben. Dies kann beispielsweise für Medikamente und ihre Verpackungen, aber auch für Lotterielose sinnvoll sein. Die aufgedruckten Informationen stellen z. B. die Authentifizierung sicher oder dienen der Gültigkeitsprüfung. Auch kapazitiv auslesbare Informationsträger sind u. a. aus den Anmeldungen US 3,719,804 (permanenter Informationsspeicher) und US 4,587,410 (Parksystem) bekannt. Im letztgenannten Beispiel ist die Bearbeitung und Veränderbarkeit von kapazitiven Strukturen für ein Parkmeter dargestellt. Mittels mechanischer Einheit wird die kapazitive Struktur im Lesegerät sukzessive verändert und so ihr "innerer Wert" verändert. Eine Individualisierung der Strukturen ist nicht vorgesehen. Das komplette System ist ein autarkes System ohne Interaktion zu anderen Systemen oder einer Datenverarbeitung bzw. Datenspeicherung. In US 3,719,804 sind die Herstellmöglichkeiten mittels Drucktechniken wie beispielsweise Siebdruck, Flexodruck und Tiefdruck aufgeführt. Die Beschreibung bezieht sich auf flüssig prozessierbare Materialien, welche sich für Druckprozesse eignen. Dies ist mit allen Problemen behaftet, die solche flüssig prozessierbaren Tinten mit sich bringen. Die Tinten, die dem genügen, sind sehr teuer, beinhalten Lösemittel, sind begrenzt haltbar und verursachen prozesstechnische Probleme. Die Individualisierung erfolgt mittels Trenntechniken der aufgebrachten Leiterzüge. Das Ausleseverfahren ist stark positionsabhängig und ist mit einer festen Ausleseposition des Informationsträgers im Lesegerät verbunden.

Zusammenfassend weisen die im Stand der Technik vorgeschlagenen Lösungen für Informationsträger mehrere Nachteile auf. Sie sind beispielsweise für die Massenanwendung nicht preiswert genug, können aufgrund ihres komplexen Aufbaus nur unvollkommen recycelt werden (RFID-Systeme), sind mitunter leicht kopierbar (Barcodes), erzeugen hohen Aufwand durch Anbringung auf das Endprodukt oder lassen sich nur schlecht oder gar nicht drucktechnisch weiterverarbeiten (Chipkarten).

Ausgehend von diesem Stand der Technik ist es die Aufgabe der vorliegenden Erfindung, einen einfach zu realisierenden kapazitiven Informationsträger für einen kapazitiven Flächensensor zum Auslösen wenigstens eines Ereignisses zu schaffen. Ein Ereignis bezeichnet im Sinne der Erfindung insbesondere Dasjenige, was eine Aktion und damit eine Zustandsveränderung, bevorzugt innerhalb von Anwendungen, auslöst. Diese Ereignisse können beispielsweise Benutzereingaben oder Systemereignisse sein. Die Ereignisse werden bevorzugt auf Geräten ausgelöst welche selbst den Flächensensor tragen beispielsweise Smartphones, Handys, Displays, Tablet-PCs, Tablet-Notebooks, Touchpad-Geräte, Grafiktabletts, Fernseher, MP3 Player, Trackpads und kapazitive Eingabegeräte ohne darauf begrenzt zu sein.

Diese Aufgabe wird durch die in den unabhängigen Ansprüchen aufgeführten Merkmale gelöst, wobei bevorzugte Ausführungsvarianten der Erfindung in den Unteransprüchen beschrieben sind.

Es war völlig überraschend, dass mit den erfindungsgemäßen kapazitiven Informationsträgern, dem erfindungsgemäßen System sowie der Verwendung von Informationsträgern und -systemen und durch das erfindungsgemäße Verfahren zur Erfassung von Informationen die Nachteile des Standes der Technik überwunden werden konnten.

Gemäß der Erfindung ist auf einem elektrisch nicht leitfähigen Substrat mindestens eine elektrisch leitfähige Schicht als Touch-Struktur angeordnet. Vorteilhafterweise besteht das Substrat in einer weiteren bevorzugten Ausführungsform aus einem Kunststoff, einem Papier, einem Karton, einem Holzwerkstoff, einem Verbundwerkstoff, Glas, Keramik, Textilien, Leder oder einer Kombination davon. Günstigerweise ist die elektrisch leitfähige Schicht bevorzugt eine Metallschicht, eine Metallpartikel enthaltene Schicht, eine elektrisch leitfähige Partikel enthaltene Schicht, elektrisch leitfähige Polymerschicht oder eine Schicht aus wenigstens einer Kombination dieser Schichten. Elektrisch leitfähige Partikel sind dabei insbesondere Ruß- oder Graphitpartikel. Erfindungsgemäß ist daher eine Touch-Struktur insbesondere eine strukturiert aufgebrachte Schicht aus leitfähigem Material. Durch die erfindungsgemäße Verknüpfung dieser beiden Eigenschaften, elektrische Leitfähigkeit und Struktur, ist es überraschenderweise gelungen eine gezielte Wechselwirkung der Touch-Struktur mit kapazitiven wirksamen Bereichen eines Flächensensors zu erreichen. Damit wird die Struktur der Touch-Struktur für ein, mit dem Flächensensor verbundenem Datenverarbeitungssystem auswertbar.

In einer weiteren bevorzugten Ausführungsform ist auf einem elektrisch nicht leitfähigen Substrat mindestens eine elektrisch leitfähige, die Anordnung und/oder Eigenschaften von Fingerkuppen nachbildende, Touch-Struktur angeordnet. Die zusätzliche Eigenschaft der Touch-Struktur, die Anordnung und/oder Eigenschaften von Fingerkuppen nachzubilden, ist dabei besonders vorteilhaft, weil eine solche Struktur für ein mit dem Flächensensor verbundenes Datenverarbeitungssystem einfach auswertbar und besser softwaretechnisch zu verarbeiten ist.

Es kann bevorzugt sein, auf dem erfindungsgemäßen Informationsträger mehrere Touch-Strukturen aufzubringen. Vorteilhafterweise können Form, Orientierung, Anzahl, Ausrichtung, Abstand und/oder Position von Teilbereichen der Touch-Struktur zur Speicherung einer Information genutzt werden.

In einer bevorzugten Ausführungsform der Erfindung kann es vorgesehen sein, dass auf dem Substrat mindestens eine Koppelfläche angeordnet ist, welche mit der mindestens einen Touch-Struktur über mindestens eine Leiterbahn verbunden ist und/oder Teil der Touch-Struktur eine Koppelfläche ist.

Eine Koppelfläche ist im Sinne der Erfindung insbesondere ein elektrisch leitfähiger Bereich auf dem Substrat. Die Koppelfläche stellt eine bevorzugte Variante des erfindungsgemäßen Informationsträgers dar, welche es beispielsweise ermöglicht, elektrische Fremdkapazitäten, welche nicht Bestandteil des Touch-Struktur sind, anzukoppeln und damit die wirksame elektrische Kapazität der Touch-Struktur des Informationsträgers zu erhöhen. Dadurch können die Informationsträger besonders sicher und zuverlässig ausgelesen werden. Das kann sowohl durch Berührung oder Annäherung einer Person als auch Kopplung einer weiteren an einem Gegenstand befindlichen elektrisch leitfähigen Schicht erfolgen.

Leiterbahnen bestehen bevorzugt aus dem gleichen elektrisch leitfähigen Material wie die Touch-Struktur selbst und stellen bevorzugt eine elektrische Verbindung zwischen zwei oder mehr Teilbereichen her.

Da Touch-Struktur, Leiterbahnen und Koppelfläche bevorzugt aus dem gleichen oder einem ähnlichen elektrisch leitfähigen Material bestehen, ist die Anwendung nur eines technologischen Verfahrens nötig, um diese Bereiche des Informationsträgers gleichzeitig herstellen zu können. Dadurch sind die Informationsträger als Massenprodukt leicht und ökonomisch realisierbar.

Günstigerweise ist nach einer weiteren bevorzugten Ausführungsform das elektrisch leitfähige Material eine gedruckte Schicht auf dem Substrat. Die Schicht ist damit mit einem Additivverfahren leicht und ökonomisch günstig realisierbar. Es ist jedoch auch bevorzugt, dass die elektrisch leitfähige Schicht mittels eines Transferverfahrens auf das Substrat übertragen wird. Erfindungsgemäß kann das Aufbringen der Schicht auf dem Substrat durch an sich bekannte Transferverfahren erfolgen; bevorzugt handelt es sich hierbei um das Transferfolienverfahren und besonders bevorzugt um ein Kaltfolientransferverfahren. Dem Fachmann sind derartige Verfahren bekannt. Selbstverständlich können auch alle anderen Verfahren zur strukturierten Aufbringung einer elektrisch leitfähigen Schicht verwendet werden.

Die elektrisch leitfähige Schicht ist nach einer weiteren bevorzugten Ausführungsform durch Anwendung eines Subtraktivverfahrens realisiert, wobei Schichtbereiche abgetragen sind. Dabei kommen bekannte Ätz- oder Laserabtragverfahren zum Einsatz. Bei letzteren wird das abzutragende Material durch das Wirken der Laserstrahlen verdampft. Selbstverständlich können auch weitere Verfahren eingesetzt werden.

Vorteilhafterweise befindet sich gemäß einer weiteren bevorzugten Ausführungsform wenigstens eine das Substrat des Informationsträgers ganz oder teilweise überdeckende Deckschicht. Die Deckschicht kann vorteilhafterweise als Schutz oder Unkenntlichmachung der Touch-Struktur des Informationsträgers verwendet werden. In einer bevorzugten Variante kann diese Deckschicht auch als Deckplatte ausgeführt sein. Die Deckplatte kann aus starren oder flexiblen Materialien bestehen.

Es war völlig überraschend, dass der Informationsträger oder eine Gruppe von Informationsträgern und/oder das erfindungsgemäße System in zahlreichen Bereichen des Wirtschaftslebens verwendet werden können. Diese umfassen beispielsweise Spielkarten, Sammelkarten, Briefmarken, Frankierung, Porto, Warenlogistik, Warenverfolgung, Einlass, Eintrittskarten, Zugang zu geschlossen Bereichen, virtuellen Inhalten, Marketinganwendungen, Kundenbindung, Lotterie- und Gewinnspielen, Mitgliederausweise, Zeitkarten, Bezahlanwendungen, Echtheits-Zertifikate, Zertifikate, Fälschungssicherungen, Kopierschutze, Signaturen, Lieferscheine, Kontoauszüge, Beipackzettel, Gegenstände innerhalb von Computerspielen, Music/Video/E-Books-Downloads, Bonusmarken/-programme, Gerätesteuerungen oder Geschenkkarten, ohne darauf begrenzt zu sein.

Es kann auch bevorzugt sein, dass der Informationsträger mit einem Gegenstand verbunden ist oder der Gegenstand selbst als Substrat dient. Als Gegenstand wird im Sinne der Erfindung insbesondere ein Ding, eine Sache oder ein Objekt bezeichnet. Ein Gegenstand ist bevorzugt ausgewählt aus der Gruppe umfassend eine Verpackung, Geschirr, Druckerzeugnisse, Kleidung, Möbel, Dokumente, Spielzeug, Konsumartikel, Lebensmittel, Halbzeuge, Maschinenteile, Baustoffe, Ein- und Mehrwegbehältnisse und/oder elektrische Geräte. Prinzipiell können auch nicht flächig ausgebildete Gegenstände direkter Träger eines Informationsträgers sein (Gegenstand übernimmt Substratfunktion) oder auch indirekt, indem der Informationsträger an dem Gegenstand angebracht oder aufgebracht sein kann. Die An- oder Aufbringung kann beispielsweise selbstklebend oder mittels anderer bekannter Verbindungstechnologien oder Hilfsstoffe erfolgen, beispielsweise ein Label an Textilien.

Vorteilhafterweise ist mindestens ein Informationsträger mit mindestens einem Flächensensor mindestens bereichsweise in Kontakt. Dazu befindet sich auf einem Substrat mindestens eine bereichsweise aufgebrachte elektrisch leitfähige Schicht, wobei wenigstens ein Bereich der elektrisch leitfähigen Schicht ein Teilbereich ist. Der oder die Teilbereich(e) werden im Sinne der Erfindung auch als Touch-Struktur bezeichnet. Die Form, Orientierung, Anzahl, Ausrichtung, Abstand und/oder Position der Touch-Struktur oder deren Teilbereiche bilden bevorzugt die Information, so dass bei mindestens bereichsweiser Positionierung des Informationsträgers an dem Flächensensor oder über eine relative Bewegung wenigstens eines Bereiches des Informationsträgers gegenüber dem Flächensensor wenigstens ein Ereignis ausgelöst wird. Eine bereichsweise Positionierung des Informationsträgers auf dem Flächensensor bedeutet im Sinne der Erfindung, dass insbesondere mindestens ein Bereich des Informationsträgers mit mindestens einem Bereich des Flächensensors in Kontakt steht.

Der Informationsträger wird bevorzugt derart mit dem Flächensensor in Kontakt gebracht, dass durch den Flächensensor mindestens ein Ereignis ausgelöst wird.

Im Sinne der Erfindung bedeutet in Kontakt bringen, dass insbesondere zwischen dem Informationsträger und dem Flächensensor bevorzugt kein Freiraum besteht. Das heißt, der Informationsträger ist bevorzugt mit dem Flächensensor in Berührungskontakt. Es kann jedoch auch bevorzugt sein, dass zwischen dem Informationsträger und dem Flächensensor kein direkter Kontakt besteht, sondern bereits eine Annäherung ausreicht, um ein Ereignis auszulösen. Bei einer Annäherung besteht zwischen Informationsträger und Flächensensor ein bevorzugter Abstand von größer 0 cm bis 2 cm.

Demgemäß betrifft die Erfindung auch ein System, umfassend mindestens einen kapazitiven Informationsträger und mindestens einen kapazitiven Flächensensor, wobei zwischen dem Informationsträger und dem Flächensensor ein Kontakt oder Annäherung erfolgt und hierdurch eine kapazitive Wechselwirkung erreicht wird. Durch die kapazitive Wechselwirkung wird die Touch-Struktur des Informationsträgers für ein mit dem Flächensensor verbundenes Datenverarbeitungssystem auswertbar und kann dadurch mit dem Informationsträger assoziierte Ereignisse auslösen.

Durch diese kapazitive Wechselwirkung kann bevorzugt ein Ereignis auf dem den Flächensensor tragenden Gerät ausgelöst werden. Das Ereignis löst wiederum Aktionen aus, wie beispielsweise die Aktivierung und/oder Beenden einer Anwendung, das Verändern von numerischen Werten und/oder Texten, das Manipulieren von Grafiken, das Verändern von Datenbeständen oder das Erlangen von Zugriff auf informationstechnische Dienste ohne darauf beschränkt zu sein.

Bevorzugt ist, dass der Flächensensor mindestens ein kapazitives Display umfasst und das den Flächensensor beinhaltende Gerät ausgewählt ist aus der Gruppe umfassend Smartphones, Handys, Displays, Tablet-PCs, Tablet-Notebooks, Tochpad-Geräte, Grafiktabletts, Fernseher, PDAs, MP3-Player, Trackpads und/oder und kapazitive Eingabegeräte ohne darauf begrenzt zu sein. Ein kapazitiver Flächensensor kann beispielsweise auch Bestandteil von Eingabegeräten als Touchscreen, Touchpad oder Grafiktablett sein. Touchscreens sind auch als Tastschirm oder Sensorbildschirm bekannt. Derartige Eingabegeräte werden unter anderem in Smartphones, PDAs, Touchdisplays oder Notebooks eingesetzt. Ein Flächensensor muss sich dabei nicht zwingend vor einem Display befinden. Beispielsweise kann dieser auch als Tastatur ausgebildet und eingesetzt werden. Neben einer Klickfunktion ist auch eine Drag-and-Drop-Operation ausführbar. Weiterhin können mehrere gleichzeitige Berührungen in Form eines sogenannten "Multi-Touch" dazu verwendet werden, um zum Beispiel angezeigte Elemente insbesondere zu drehen oder zu skalieren. Der Flächensensor ist dabei bevorzugt als sogenannte Projected-Capacitive-Touch-Technik (PCT) ausgeführt. Varianten der PCT-Technik sind beispielsweise "Mutual Capacitance" und "Self Capacitance" welche ausgeführt sein können als Mutual-Capacitance-Screen und Self-Capacitance-Screen.

Die erfindungsgemäßen Informationsträger zeichnen sich vorteilhafterweise dadurch aus, dass damit eine Verbindung zu einem Gerät mit Flächensensor realisierbar ist. Der Flächensensor wirkt dabei bevorzugt analog einem kapazitivem Lesegerät, allerdings ohne hardwareseitig auf fest vorgegebene Leiterbahnen oder Lese-Elektroden angewiesen zu sein, wie sie derzeit limitierend aus dem Stand der Technik bekannt sind (US 3,719,804 - Permanenter Informationsspeicher). Durch die erfindungsgemäßen Informationsträger eröffnet sich eine Erweiterung des Funktionsumfangs von kapazitiven Flächensensoren beinhaltenden Geräten. Dadurch werden beispielsweise Informationen leichter zugänglich und/oder die Benutzung der Geräte vereinfacht (vor allem für körperlich eingeschränkte, behinderte oder ältere Menschen) und/oder neuartige Anwendungen ermöglicht, ohne darauf begrenzt zu sein.

Auf dem Informationsträger sind bevorzugt Informationen in Form der Touch-Struktur, die als Teilbereich ausgebildet sein kann, gespeichert. Die Informationen sind bei in Kontakt bringen oder Annäherung des Informationsträgers zum Flächensensor über diesen lesbar, wobei die Kapazität insbesondere partiell geändert wird.

Die die Information bildende Touch-Struktur, d. h. die Teilbereiche eines Bereichs bestehen aus einem elektrisch leitfähigen Material. Der Fachmann erkennt gemäß der Offenbarung der vorliegenden Erfindung, dass die Touch-Struktur aus Eckpunkten und/oder durch Kurven definierten Füllflächen besteht, beispielsweise Rechtecken, Kreisen oder ähnlichen Figuren. Die Ortsbeziehungen der Teilbereiche zueinander (Orientierung, Anzahl, Ausrichtung, Abstand und/oder Position) und/oder die Form der Teilbereiche stellen bevorzugt die Information dar. Bei der Positionierung des Informationsträgers an dem Flächensensor wird die Touch-Struktur beispielsweise als Finger-Eingabe interpretiert, so dass aus den Teilbereichen der Touch-Struktur die codierte Information bestimmbar ist, beispielsweise in Form einer binär codierten Zahl ohne darauf beschränkt zu sein. Es ist jedoch genauso ein Informationsträger direkt als solcher interpretierbar. Das Positionieren kann dabei auch durch eine Relativbewegung des Informationsträgers zum Flächensensor erfolgen. Es ist bevorzugt, dass der Flächensensor in einer Bewegung relativ zum Informationsträger fortschreitend vollständig oder teilweise Informationen von dem Informationsträger erhält. Dabei können auch in Abhängigkeit der Positionen des Informationsträgers gegenüber dem Flächensensor verschiedene Ereignisse erzeugt werden. Ausschlaggebend dazu ist beispielsweise die Bewegungsrichtung oder Verweildauer des Informationsträgers gegenüber dem Flächensensor.

Der Informationsträgers kann vorteilhafterweise als einfacher, signierter oder verschlüsselter Informationsträgers ausgestaltet sein. Damit eignet sich der Informationsträger vorteilhafterweise als Schlüssel zur berechtigten Nutzung bestimmter Datenmengen oder Hardware, wobei die Kommunikation über ein bekanntes Datennetz wie zum Beispiel das Internet erfolgen kann. Das kann auch über ein Gerät erfolgen, welches über den Flächensensor verfügt.

Eine Aktion ist nachfolgend zusammenfassend Dasjenige, was bevorzugt durch ein Ereignis ausgelöst wird.

Im Zusammenhang mit einem Flächensensor beinhaltenden Gerät ist der Informationsträger

- ein einfacher Informationsträger, um Aktionen in dem Programmablauf auf dem Gerät selbst auszulösen,

- ein signierter Informationsträger, um Aktionen in dem Programmablauf des Gerätes und/oder einem externen Datenverarbeitungssystem, welches über ein Datennetz verbunden sein kann, auszulösen.

- ein verschlüsselter Informationsträger, welcher von dem Programmablauf des Gerätes und/oder eines externen Datenverarbeitungssystems entschlüsselt wird und Aktionen im Programmablauf des Gerätes oder des externen Datenverarbeitungssystems auslöst.

Auf dem Substrat befinden sich gemäß einer weiteren bevorzugten Ausführungsform mindestens zwei Touch-Strukturen mit jeweils mindestens einer assoziierten Koppelfläche. Mit dieser Anordnung können mindestens zwei Ereignisse ausgelöst werden, indem der Nutzer beispielsweise die jeweils assoziierte Koppelfläche berührt. Dadurch können beispielsweise ja/nein-Entscheidungen vom Nutzer über den Informationsträger ausgelöst werden.

Vorteilhafterweise können mehrere Informationsträger in Kombination, insbesondere nebeneinander und/oder übereinander und/oder zeitlich nacheinander, gelesen werden. Hierdurch ist es überraschenderweise möglich, komplexe Informationen auf einem Informationsträger, wobei der Informationsträger beispielsweise auf Karton und/oder Papier aufgedruckt ist, zu speichern. Der Informationsträger verbindet überraschenderweise Printmedien mit digitalen Medien, was derart zuvor nicht möglich war.

Es ist weiterhin bevorzugt, dass der Informationsträger einem Datensatz in einem Datenverarbeitungssystem zugeordnet ist und der Datensatz konstant bleibt. In einer bevorzugten Ausführungsform wird der Informationsträger einem Datensatz in einem Datenverarbeitungssystem zugeordnet und sich der Datensatz verändert. Dies kann beispielsweise durch Verwendung des Informationsträgers und/oder durch Zeit passieren, ohne darauf begrenzt zu sein.

Vorteilhafterweise kann der Informationsträger derart verwendet werden, dass der Informationsträger in Verbindung mit einem Flächensensor über die Touch-Struktur einer Aktion eines Datenverarbeitungssystems zugeordnet werden kann oder diese auslöst. Diese Aktion trifft insbesondere auf nicht-vernetzte Datenverarbeitungssysteme und besonders bevorzugt auf vernetzten Datenverarbeitungssystemen zu.

Die Erfindung betrifft auch ein Verfahren zur Erfassung von Informationen. Hierbei wird mindestens ein kapazitiver Flächensensor und mindestens ein kapazitiver Informationsträger bereitgestellt, wobei der Informationsträger ein elektrisch nicht leitendes Substrat aufweist, welches mindestens eine elektrisch leitfähige Touch-Struktur umfasst. Der mindestens eine Informationsträger wird mit dem mindestens einen Flächensensor in Kontakt gebracht, wobei der Kontakt statisch und/oder dynamisch sein kann. Dabei beschreibt ein statischer Kontakt, dass insbesondere im Moment der Auswertung des Informationsträgers keine oder eine unwesentliche Relativbewegung zum Flächensensor stattfindet. Im Gegensatz dazu beschreibt ein dynamischer Kontakt, dass insbesondere eine Relativbewegung während der Auswertung des Informationsträgers stattfinden kann. Der Kontakt kann erfindungsgemäß auch eine Annäherung umfassen. Durch den Kontakt wird eine kapazitive Wechselwirkung ausgelöst, wobei durch die kapazitive Wechselwirkung Informationen von dem Informationsträger auf den Flächensensor übertragen werden.

Der Bereich der elektrisch leitfähigen Schicht - der Touch-Struktur - besteht bevorzugt aus Teilbereichen. Insbesondere die Form, Orientierung, Anzahl, Ausrichtung, Abstand und/oder Position der Teilbereiche bilden die Informationen des Informationsträgers, so dass bei in Kontakt bringen des Informationsträgers mit dem Flächensensor ein Ereignis ausgelöst wird. Dabei kann der Programmablauf eines Gerätes mit dem Flächensensor gesteuert werden. Die Teilbereiche, d. h. die Touch-Struktur bestehen bevorzugt aus Eckpunkten und/oder durch Kurven definierten Füllflächen, beispielsweise Rechtecke, Kreise oder ähnliche Figuren.

Die Teilbereiche können beispielsweise 8 mm große Kreise sein. Damit sind sie virtuell auf einem Flächensensor von 50 mm Breite und 75 mm Höhe bei 163 ppi (pixel per inch) Auflösung rund 50x50 Pixel groß. Die Teilbereiche einer Größe von 8 mm können 54-mal auf dem Flächensensor in einer Anordnung von 6 x 9 aufgeteilt werden. Damit ergibt sich folgendes:

Die Position der Teilbereiche ist bis auf die Hälfte ihres Durchmessers bestimmbar, die Anzahl der möglichen Positionen verdoppelt sich dadurch pro Achse, jeweils eine Position am Rand entfällt jedoch. Damit sind (6*2 - 1) x (9*2 - 1), also 11 x 17 Positionen unterscheidbar.

Eine belegte Position sperrt im Extremfall neun mögliche benachbarte Positionen. Bei fünf benutzten Positionen fallen von den 17 x 11 = 187 möglichen Positionen also 5 x 9 = 45 Positionen weg. Damit bleiben 142 freie Positionen. Die freien Positionen als Teilbereiche unterliegen dem Binomialkoeffizienten.

Also ergibt die Formel $\binom{142}{5}$ die möglichen Anordnungen der Teilbereiche. In diesem Fall sind das 448072338 verschiedene Anordnungen von Teilbereichen möglich. Diese Zahl kann als Binärzahl mit 29 Stellen dargestellt werden. Daraus ergeben sich mindestens $2^{28}$ mögliche Anordnungen und es können 28 Bit an Daten dargestellt werden.

Für die Anzahl an Teilbereichen von 5 bis 18 ergibt sich folgende Tabelle:

| | | | | | | | | |
|---|---|---|---|---|---|---|---|---|
| 5 | * | 9 | = | 45 | 142 | über | 5 | $< 2^{29}$ |
| 6 | * | 9 | = | 54 | 133 | über | 6 | $< 2^{33}$ |
| 7 | * | 9 | = | 63 | 124 | über | 7 | $< 2^{37}$ |
| 8 | * | 9 | = | 72 | 115 | über | 8 | $< 2^{40}$ |
| 9 | * | 9 | = | 81 | 106 | über | 9 | $< 2^{42}$ |
| 10 | * | 9 | = | 90 | 97 | über | 10 | $< 2^{44}$ |

(fortgesetzt)

| | | | | | | | | |
|---|---|---|---|---|---|---|---|---|
| 11 | * | 9 | = | 99 | 88 | über | 11 | $< 2^{45}$ |
| 12 | * | 9 | = | 108 | 79 | über | 12 | $< 2^{46}$ |
| 13 | * | 9 | = | 117 | 70 | über | 13 | $< 2^{46}$ |
| 14 | * | 9 | = | 126 | 61 | über | 14 | $< 2^{45}$ |
| 15 | * | 9 | = | 135 | 52 | über | 15 | $< 2^{43}$ |
| 16 | * | 9 | = | 144 | 43 | über | 16 | $< 2^{38}$ |
| 17 | * | 9 | = | 153 | 34 | über | 17 | $< 2^{32}$ |
| 18 | * | 9 | = | 162 | 25 | über | 18 | $< 2^{19}$ |

Demnach ergibt sich mit zwölf Teilbereichen ein Maximum von 45 Bit Daten, welche nach diesem Beispiel darstellbar sind. Daraus ergibt sich:

-   bei maximal fünf Teilbereichen sind bis maximal 28 Bit auf einem Informationsträger 1 unterzubringen und

-   bei zwölf Teilbereichen sind bis maximal 45 Bit auf einem Informationsträger 1 unterzubringen.

Die Datenmenge ist durch Verkleinerung der Teilbereiche wesentlich vergrößerbar. Für Teilbereiche mit einer Größe von 4 mm ergibt sich folgendes:

-   bei fünf unterscheidbaren Positionen sind theoretisch bis zu 40 Bit Daten möglich,

-   bei zwölf unterscheidbaren Positionen sind theoretisch bis zu 84 Bit Daten möglich und

-   bei unterscheidbaren Positionen sind theoretisch bis zu 124 Bit Daten möglich.

Die Erfindung wird nunmehr anhand von Figuren beispielhaft beschrieben, ohne jedoch auf diese beschränkt zu sein; es zeigt:

Fig. 1 bis Fig. 4          Draufsichten von bevorzugten Ausgestaltungen eines Informationsträgers

Fig. 5a und Fig. 5b          Informationsträger in einer Schnittdarstellung

Fig. 6 und Fig. 7          Informationsträger mit Leiterbahnen

Fig. 8 bis Fig. 11 1          Informationsträger mit Leiterbahnen und Koppelfläche(n)

Fig. 12a und Fig. 12b          Informationsträger mit einer Deckschicht in einer Schnittdarstellung

Fig. 13 und Fig. 14          Informationsträger an einem Gegenstand

Fig. 15 bis Fig. 20          Interaktion eines oder mehrerer Informationsträger mit einem Flächensensor

Fig. 21 bis Fig. 25          bevorzugte Anwendungen eines Informationsträgers.

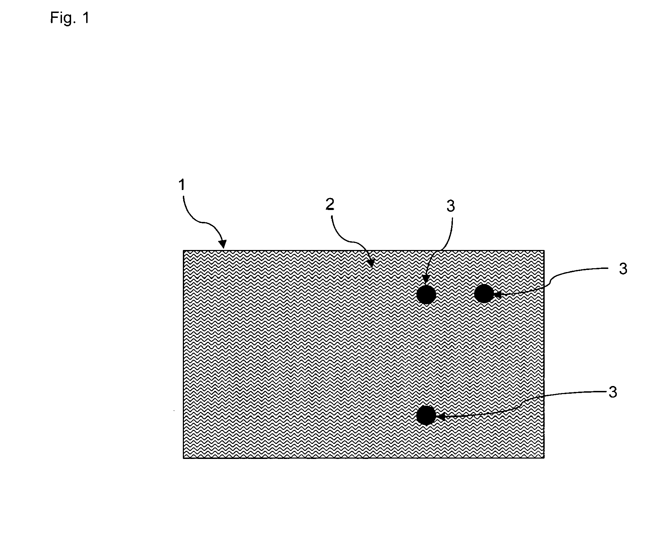

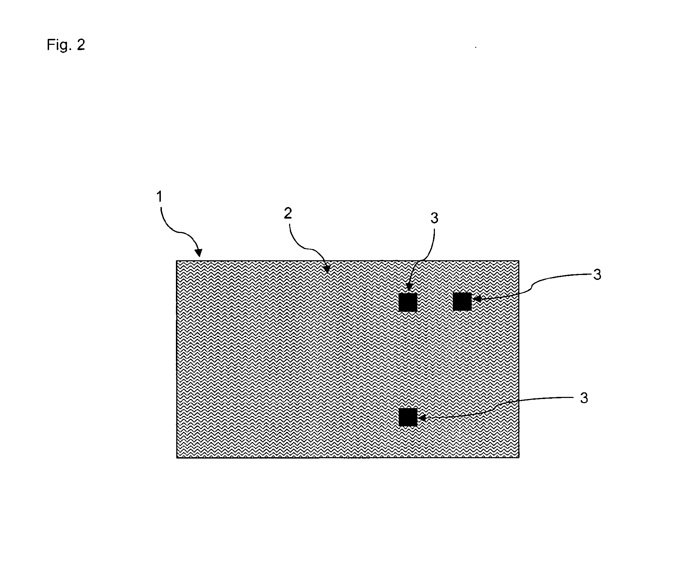

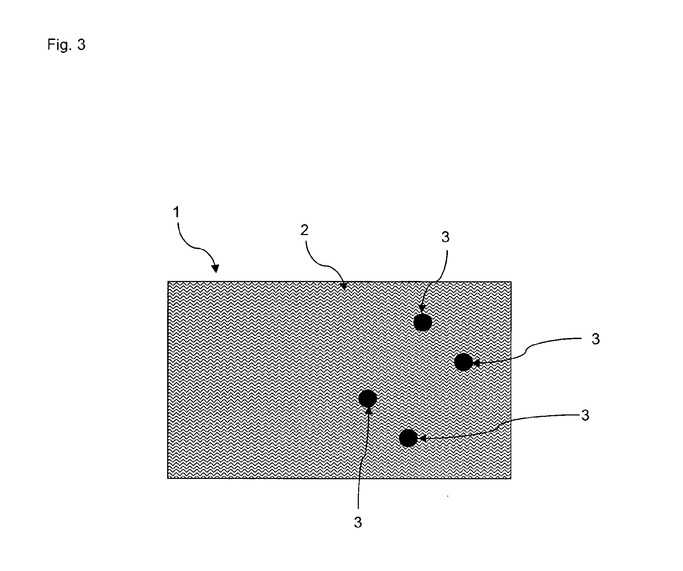

Fig. 1 bis Fig. 4 zeigen Draufsichten von bevorzugten Ausgestaltungen eines Informationsträgers 1. Ein Informationsträger 1 besteht im Wesentlichen aus einem Substrat 2 mit mindestens einer bereichsweise aufgebrachten und elektrisch leitfähigen Schicht, wobei die Schicht die Touch-Struktur 3 ist. Das Substrat 2 ist ein Träger und besteht bevorzugt aus einem Kunststoff, einem Papier, einem Karton, einem Holzwerkstoff, einem Verbundwerkstoff, Glas, Keramik, Textilien, Leder oder einer Kombination davon. Auf dem Substrat 2 ist bereichsweise die elektrisch leitfähige Touch-Struktur 3 aufgebracht.

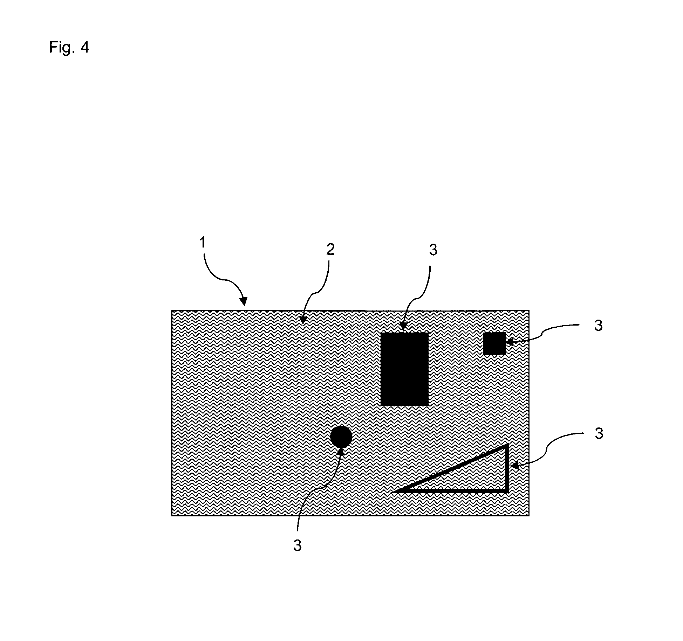

Die Touch-Struktur 3 kann beispielsweise in Form von Kreisen und/oder Rechtecken auf das Substrat 2 aufgetragen sein. Vorteilhafterweise kann die Touch-Struktur 3 auch mit unterschiedlichen geometrischen Figuren (Fig. 1, 2, 3) dargestellt werden, wobei diese auch miteinander kombinierbar sind (Fig. 4).

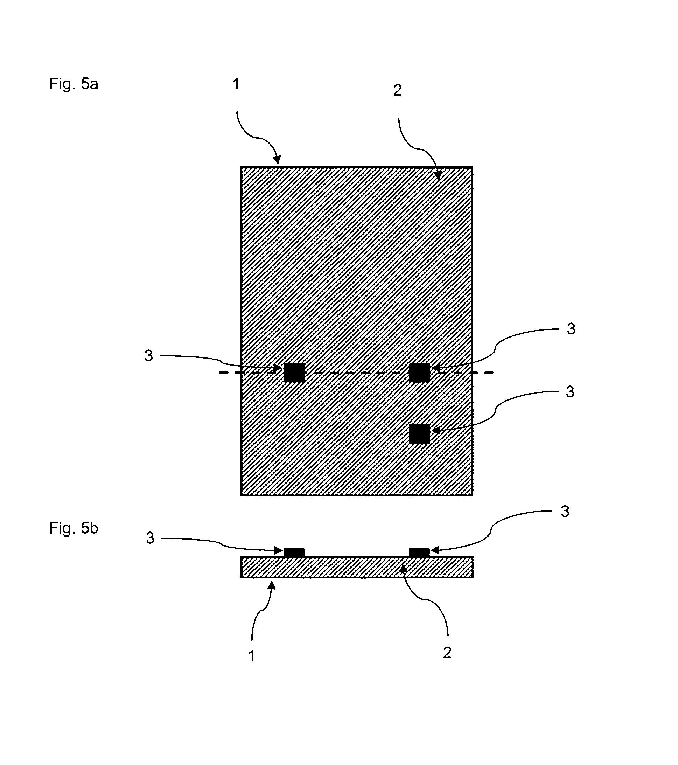

Fig. 5a und Fig. 5b zeigen einen Informationsträger 1 in einer prinzipiellen Schnittdarstellung. Die Erhebung der Touch-Struktur 3 in Fig. 5b dient zur besseren Veranschaulichung. Je nach Herstellungsverfahren für die Touch-Struktur 3 kann diese erhaben (bspw. Siebdruck), oberflächengleich (bspw. Offsetdruck) oder sogar vertieft (bspw. Heißprägen) zum umliegenden Substrat sein.

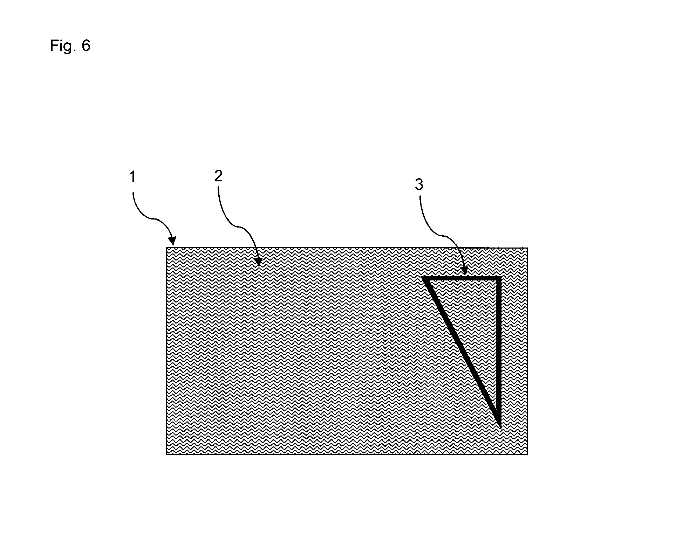

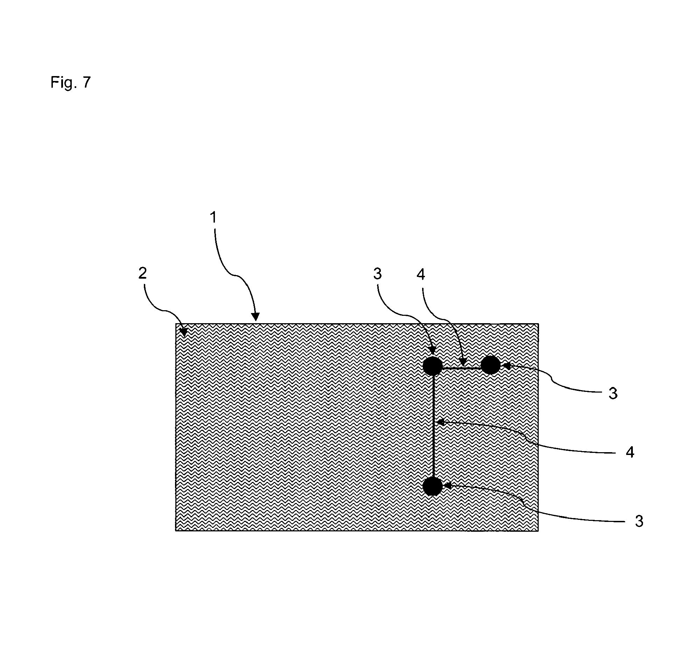

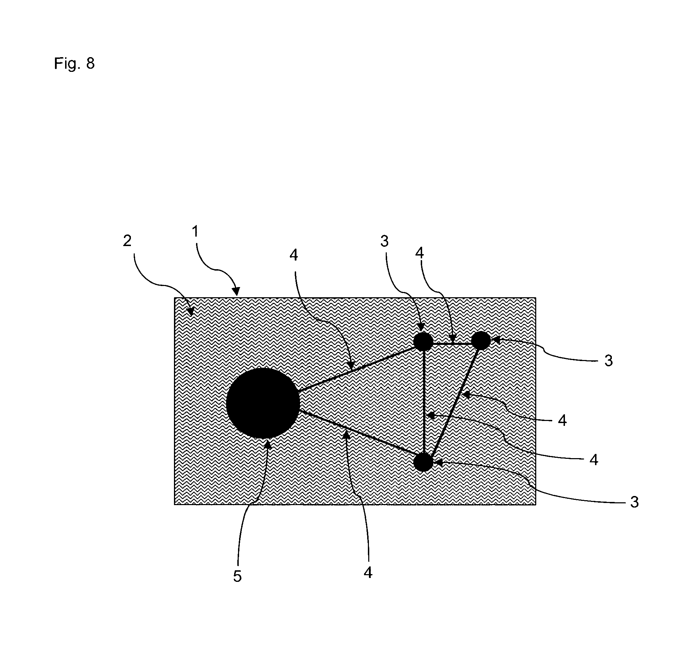

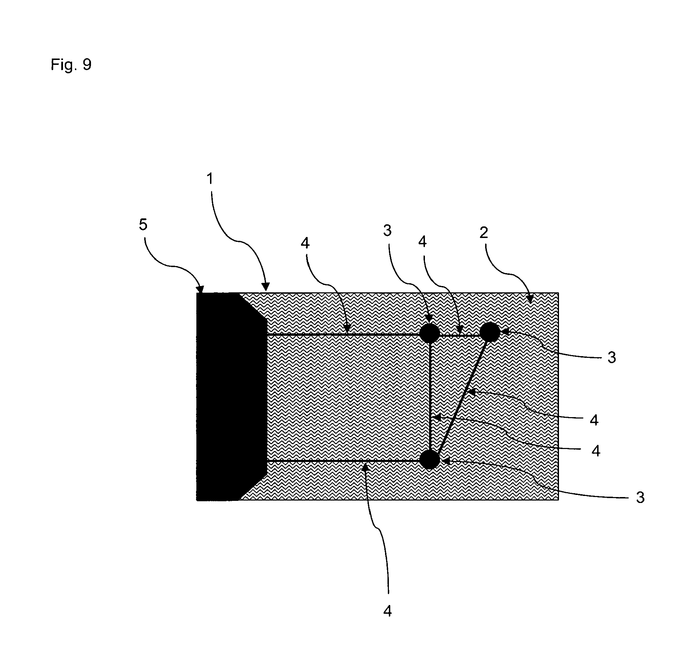

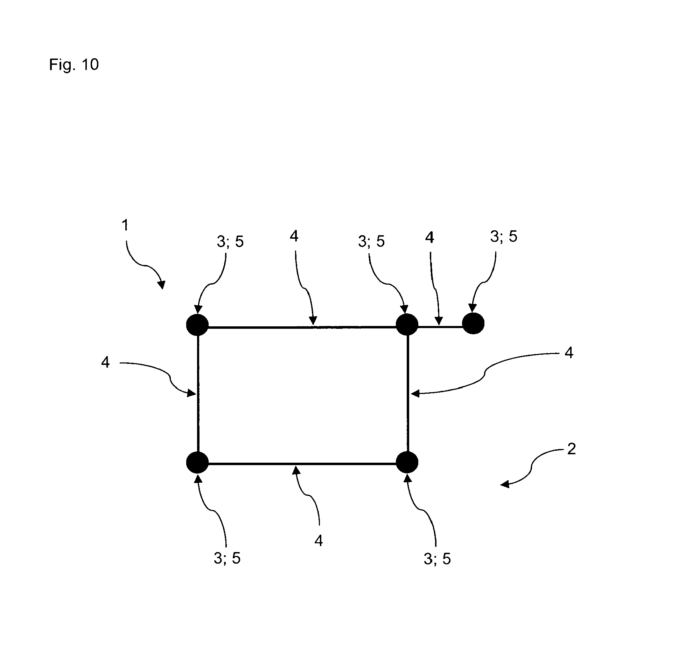

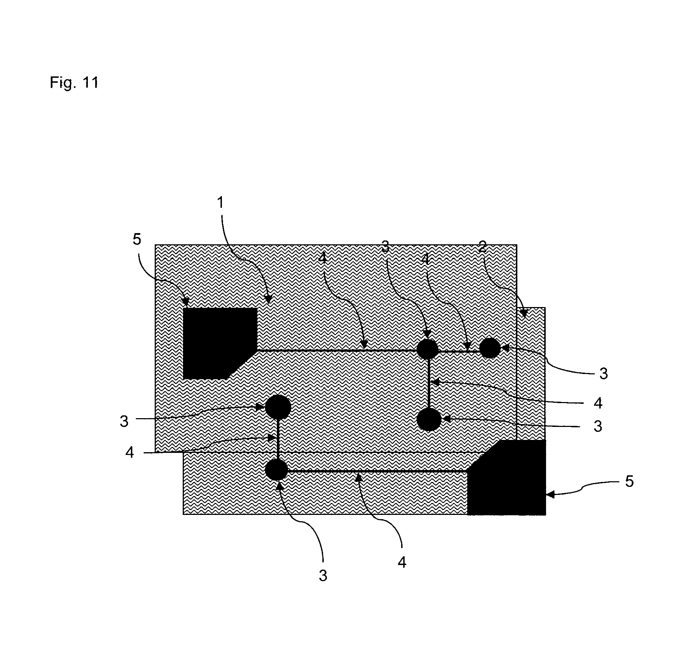

Fig. 6 und Fig. 7 zeigen Informationsträger 1 mit Leiterbahnen 4. Die Teilbereiche der Touch-Struktur 3 können vorteilhafterweise kleiner, gleich (Fig. 6) oder größer (Fig. 7) als die Leiterbahnen 4 sein. In weiteren Ausführungsformen (Fig. 8, 9, 10,11) befindet sich wenigstens ein weiterer Teilbereich der elektrisch leitfähigen Schicht (der Touch-Struktur 3) als Koppelfläche 5 auf dem Substrat 2. Die einzelnen Teilbereiche der Touch-Struktur 3 sind bevorzugt über Leiterbahnen 4 miteinander elektrisch leitend verbunden. Vorteilhafterweise sind die Touch-Struktur 3 und die Leiterbahnen 4 aus der elektrisch leitfähigen Schicht ausgebildet.

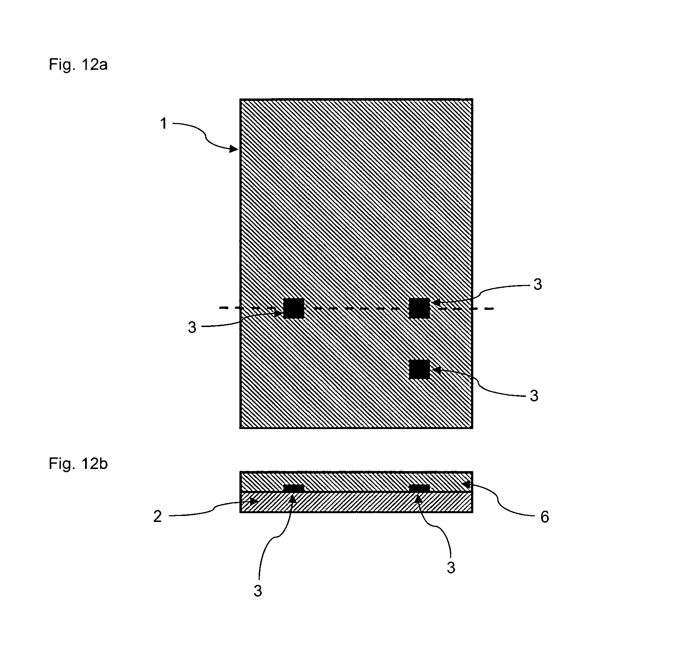

Fig. 12a und Fig. 12b zeigen einen Informationsträger 1 mit einer Deckschicht 6 in einer prinzipiellen Schnittdarstellung. Auf dem Substrat 2 und der elektrisch leitfähigen Touch-Struktur 3 befindet sich wenigstens eine Deckschicht 6, so dass ein kompakter Informationsträger 1 vorliegt und die Touch-Struktur 3 insbesondere nicht beschädigt wird oder von außen einsehbar ist. Die Deckschicht 6 kann ebenfalls als eine Deckplatte ausgestaltet sein.

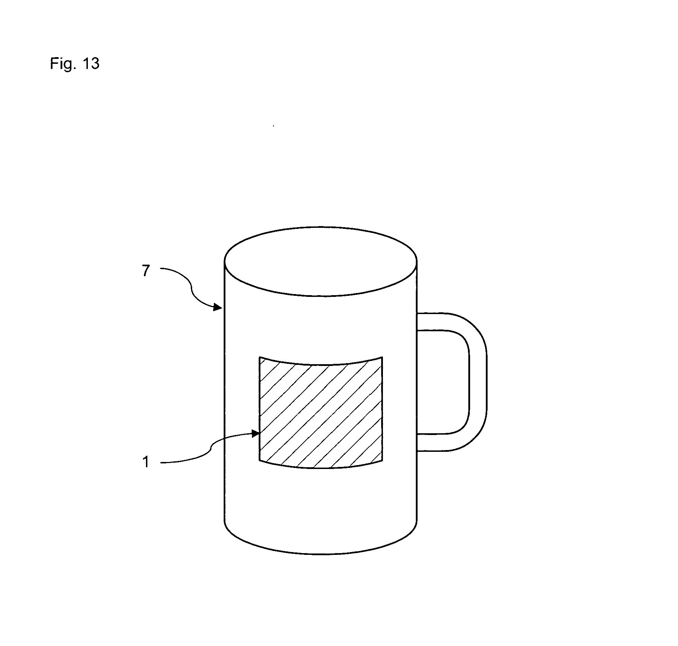

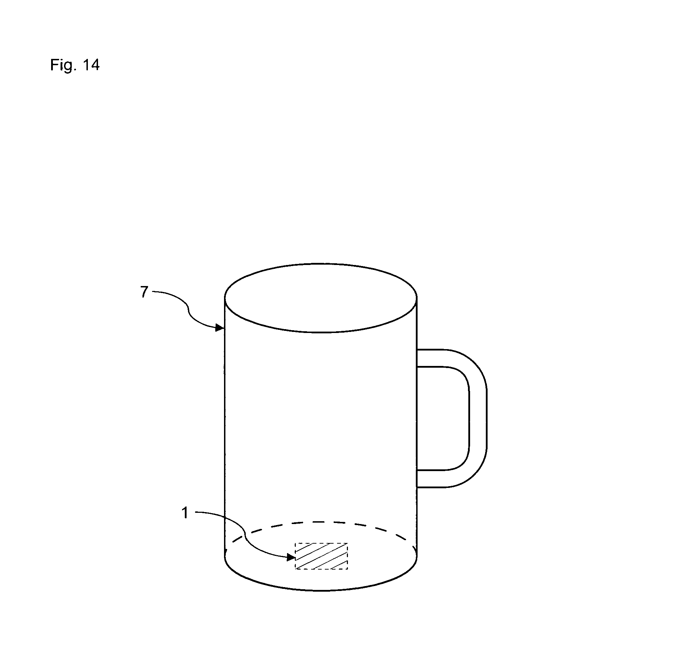

Fig. 13 und Fig. 14 zeigen einen Informationsträger 1 an einem Gegenstand 7. Vorteilhafterweise kann der erfindungsgemäße Informationsträger 1 auf einem Gegenstand 7, beispielsweise einer Tasse anbringbar sein. Hierdurch kann vorteilhafterweise einem Käufer eines Gegenstandes schnell und einfach eine digitale Information mittels des Informationsträgers 1 zukommen. Der Informationsträger 1 ist bevorzugt auf den Gegenstand 7 gedruckt, wobei der Informationsträger 1 auf eine ebene oder unebene Fläche aufgebracht werden kann.

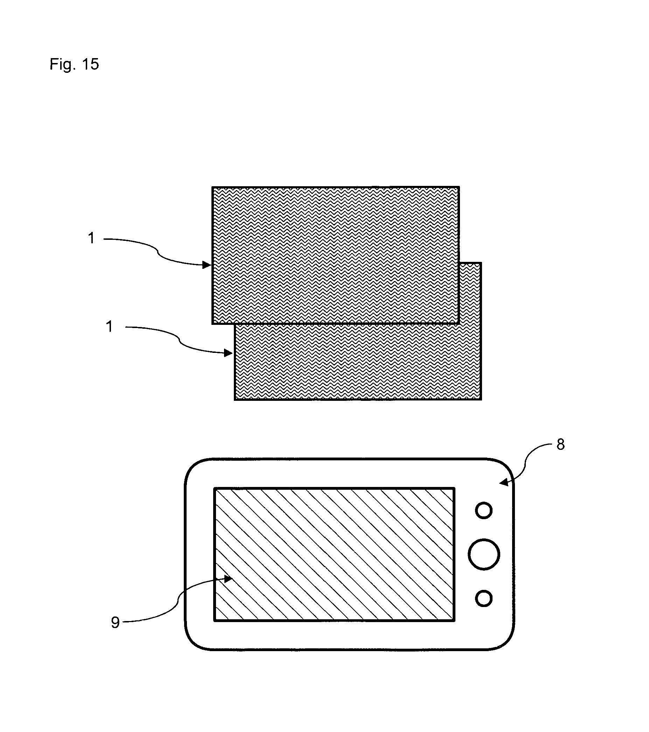

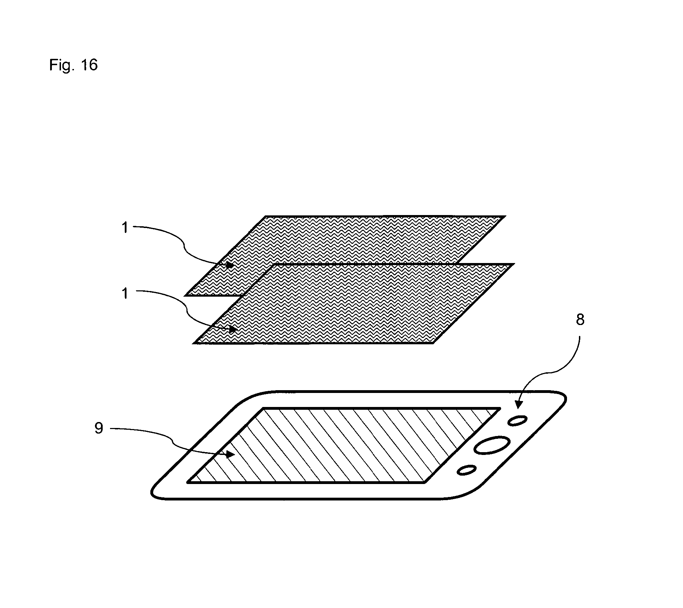

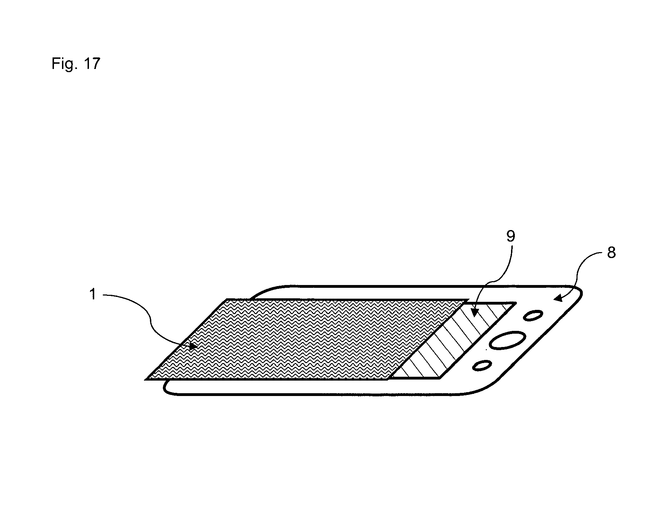

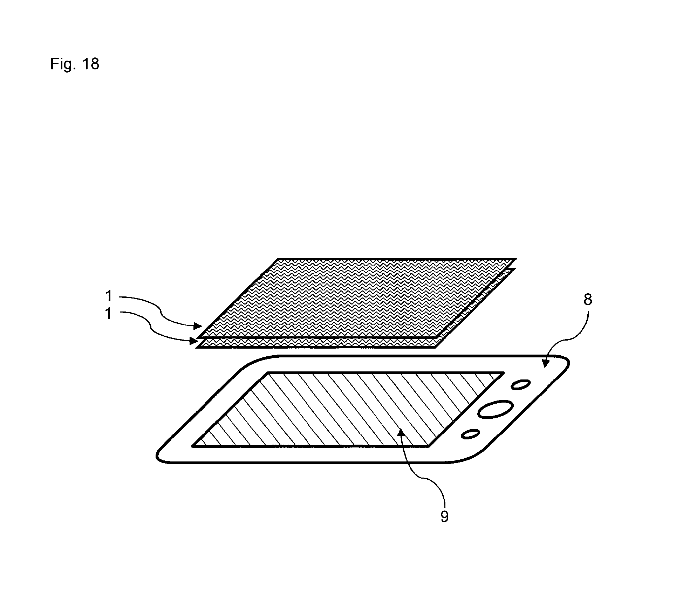

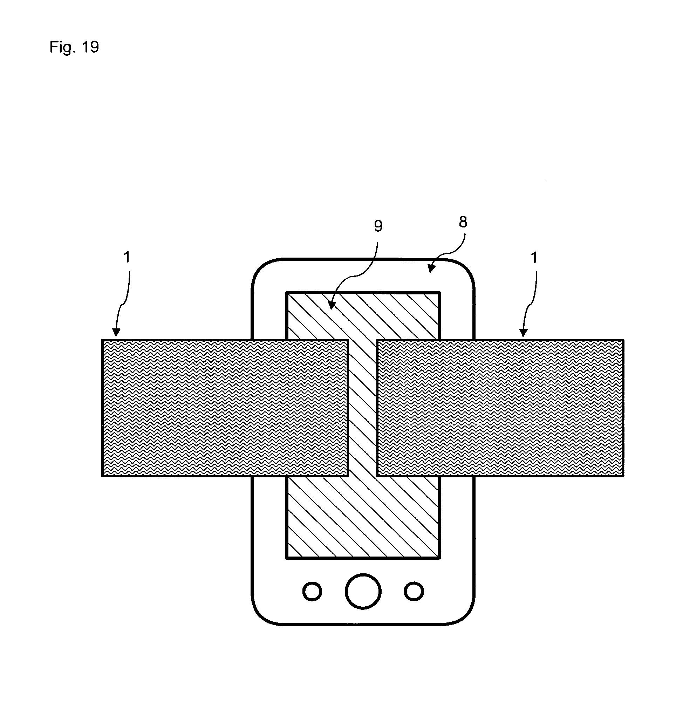

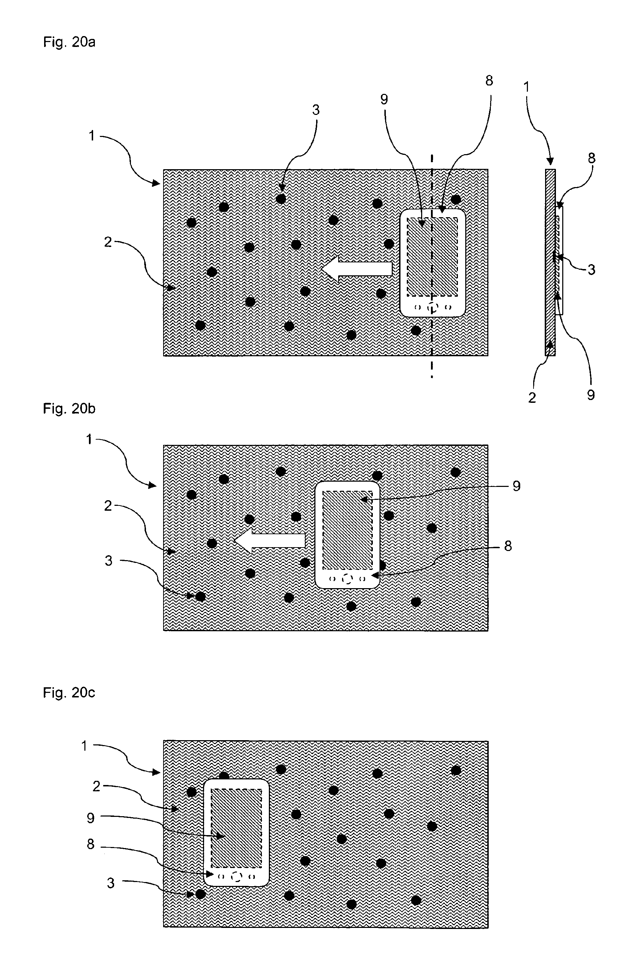

Fig. 15 bis Fig. 20 zeigen eine Interaktion eines oder mehrerer Informationsträger 1 mit einem Flächensensor 9. Der Informationsträger 1 mit den auf ihm gespeicherten Informationen kann mit einem Gerät mit Flächensensor 8, in Kontakt gebracht werden. Das Gerät mit Flächensensor 8 ist bevorzugt ein datenverarbeitendes Gerät. Der Informationsträger 1 kann beispielsweise nur bereichsweise mit dem Flächensensor 9 in Kontakt kommen. Es kann auch bevorzugt sein, dass der Informationsträger 1 nicht auf den Flächensensor 9 gelegt, sondern über diesen bewegt wird. Durch eine unterschiedliche Art und Weise der Kontaktherstellung oder Annäherung kann bevorzugt ein unterschiedliches Ereignis auf dem Flächensensor 9 ausgelöst werden. Außerdem können mehrere Informationsträger 1 mit dem Flächensensor 9 interagieren. In Fig. 20 wird der Flächensensor 9, d. h. das den Flächensensor aufweisende Gerät 8 über einen Informationsträger 1 bewegt, wobei der Informationsträger 1 mehrmals an unterschiedlichen Positionen mit dem Flächensensor 9 in Kontakt oder Annäherung kommen muss, damit die vollständige Information des Informationsträgers 1 auslesbar wird. Hierdurch können größere Informationsmengen in dem Informationsträger 1 gespeichert werden, weil damit der Informationsträger 1 größer als der Flächensensor 9 sein kann. Das Auslesen der Informationen durch das Gerät mit Flächensensor 8 kann bevorzugt durch Wisch-Bewegungen realisiert werden.

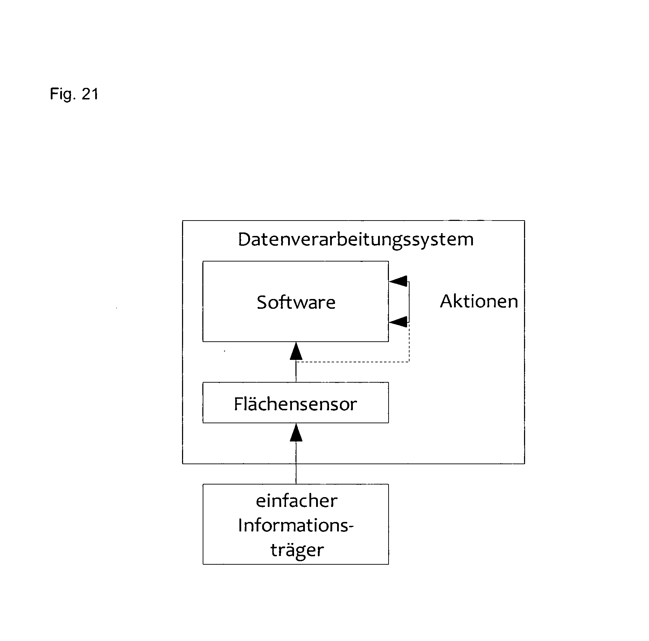

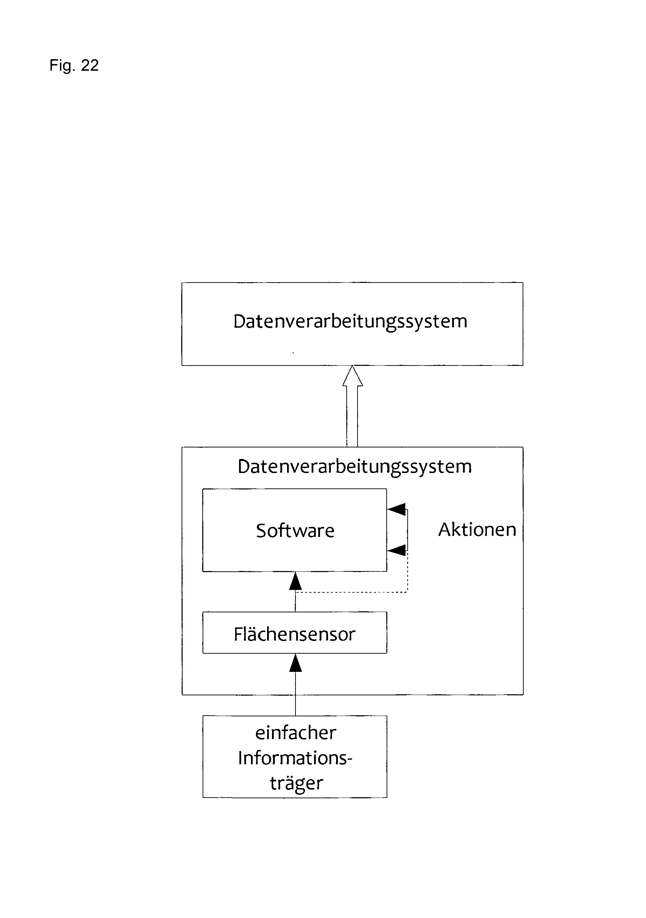

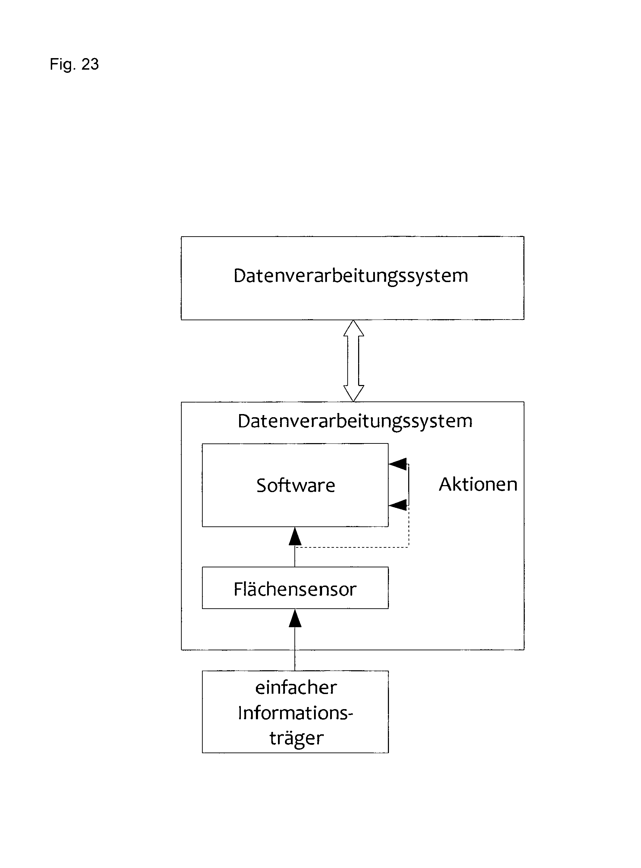

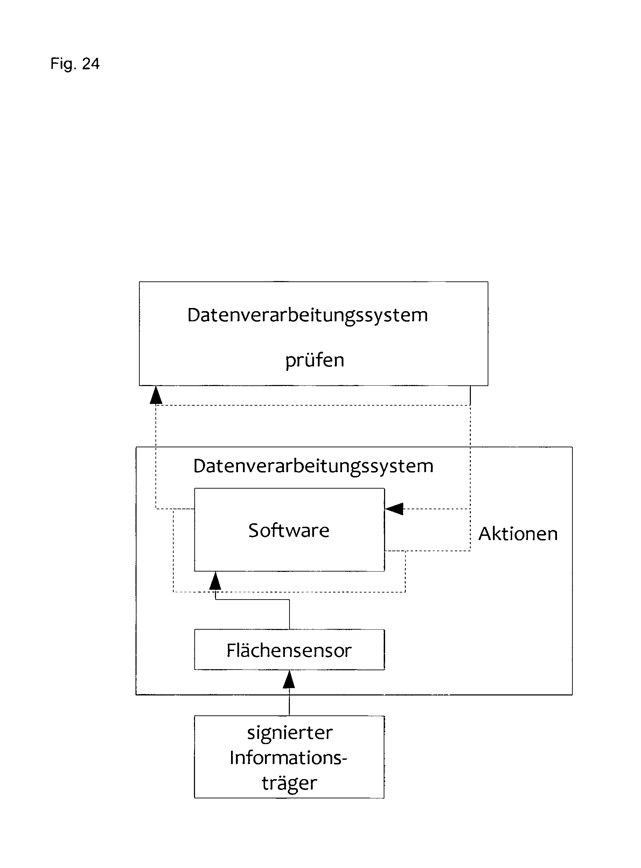

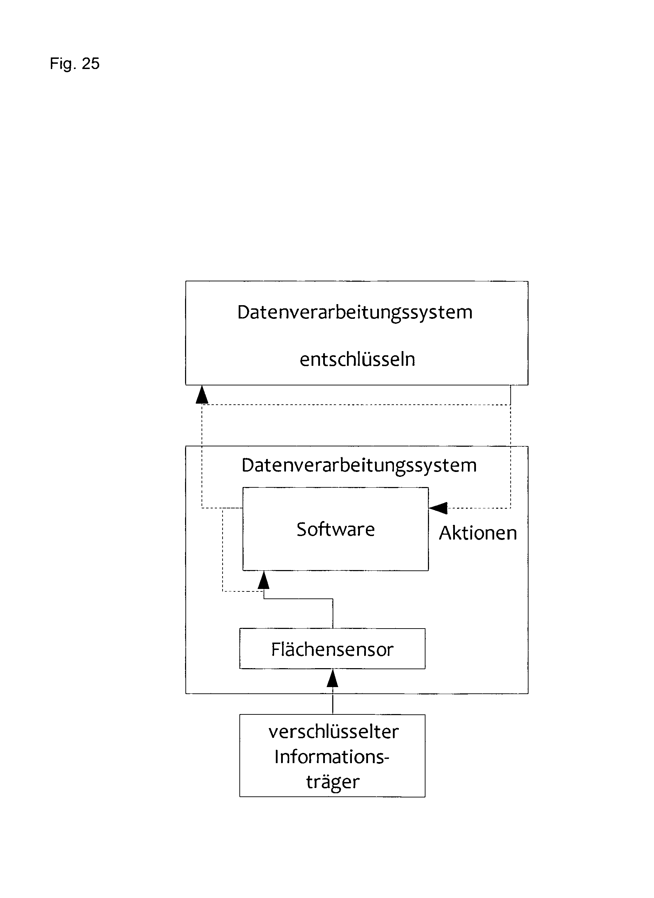

Fig. 21 bis Fig. 25 zeigen bevorzugte Anwendungen eines Informationsträgers. Der Informationsträger kann gemäß Fig. 21 als einfacher Informationsträger genutzt werden, der mit einem Flächensensor interagiert, wodurch bevorzugt ein Ereignis ausgelöst wird. Das Ereignis löst wiederum Aktionen aus, wie beispielsweise die Aktivierung und/oder das Beenden einer Anwendung, das Verändern von numerischen Werten und/oder Texten, das Manipulieren von Grafiken, das Verändern von Datenbeständen oder das Erlangen von Zugriff auf informationstechnische Dienste ohne darauf beschränkt zu sein. Außerdem kann gemäß Fig. 22 über den Flächensensor, beispielsweise in Form eines kapazitiven Touchscreens eines Gerätes, der Programmablauf eines Datenverarbeitungssystems des Gerätes selbst beeinflusst werden. Die ausgelöste Aktion kann einseitig oder beidseitig sein, d. h. es kann eine Aktion ausgelöst werden, die auf ein externes Datenverarbeitungssystem einwirkt, wobei dieses wiederum auf das des datenverarbeitende Gerätes wirkt (siehe Fig. 23). Weiterhin kann der Informationsträger als signierter Informationsträger ausgestaltet sein (siehe Fig. 24), wobei bevorzugt ein Zusammenwirken zwischen dem datenverarbeitenden Gerät, einem Datennetz und einem Datenverarbeitungssystem entsteht. Der signierte Informationsträger kann so beispielsweise über das Internet überprüft und verifiziert werden. Mittels des erfindungsgemäßen Systems wird ein Zugang und/oder die Nutzung eines Datenverarbeitungssystems ermöglicht. Dazu ist das Gerät mittels des Informationsträgers über ein Datennetz mit einem Datenverarbeitungssystem verbunden. Nach Prüfung der Signatur im Datenverarbeitungssystem ist der Zugang über das Gerät gegeben. Weiterhin kann gemäß der Fig. 25 der Informationsträger auch verschlüsselt vorliegen, wobei dieser insbesondere mit einem Gerät, einem Datennetz und einem Datenverarbeitungssystem zusammenwirkt. Über den Flächensensor des Geräts wird eine Nutzung eines Datenverarbeitungssystems ermöglicht. Dazu ist das Gerät mittels eines Datennetzes mit dem Datenverarbeitungssystem verbunden. Nach positiver Prüfung des Informationsträgers im Datenverarbeitungssystem ist der Zugang über das Gerät gegeben.

Bezugszeichenliste

1    Informationsträger

2    Substrat

3 Touch-Struktur

4 Leiterbahn

5 Koppelfläche

6 Deckschicht

7 Gegenstand

8 Gerät mit Flächensensor

9 Flächensensor

**Patentansprüche**

1. Kapazitiver Informationsträger (1),
   **dadurch gekennzeichnet, dass**
   auf einem elektrisch nicht leitfähigen Substrat (2) mindestens eine elektrisch leitfähige Schicht als Touch-Struktur (3) angeordnet ist.

2. Kapazitiver Informationsträger (1) nach Anspruch 1,
   **dadurch gekennzeichnet, dass**
   auf einem elektrisch nicht leitfähigen Substrat (2) mindestens eine elektrisch leitfähige, die Anordnung und/oder Eigenschaften von Fingerkuppen nachbildende, Touch-Struktur (3) angeordnet ist.

3. Informationsträger (1) nach Anspruch 1 oder 2,
   **dadurch gekennzeichnet, dass**
   auf dem Substrat (2) mindestens eine Koppelfläche (5) angeordnet ist, welche mit der mindestens einen Touch-Struktur (3) über mindestens eine Leiterbahn (4) verbunden ist und/oder ein Teil der Touch-Struktur (3) eine Koppelfläche (5) ist.

4. Informationsträger (1) nach einem oder mehreren der vorherigen Ansprüche,
   **dadurch gekennzeichnet, dass**
   dieser wenigstens eine, das Substrat (2) ganz oder teilweise überdeckende-Deckschicht (6) aufweist.

5. Informationsträger (1) nach einem oder mehreren der vorherigen Ansprüche,
   **dadurch gekennzeichnet, dass**
   der Informationsträger (1) mit einem Gegenstand (7) verbunden ist oder der Gegenstand (7) selbst als Substrat (2) dient.

6. System zur Erfassung von Informationen, umfassend:

   a. mindestens einen kapazitiven Informationsträger (1) nach einem oder mehreren der vorherigen Ansprüche,
   b. mindestens einen kapazitiven Flächensensor (9) und
   c. ein statischer und/oder dynamischer Kontakt zwischen a. und b. erfolgt und hierdurch eine kapazitive Wechselwirkung erreicht wird.

7. System nach einem oder mehreren der vorherigen Ansprüche,
   **dadurch gekennzeichnet, dass**
   durch die kapazitive Wechselwirkung, die Touch-Struktur (3) des Informationsträgers (1) für ein mit dem Flächensensor (9) verbundenes Datenverarbeitungssystem auswertbar wird und dieses mit dem Informationsträger (1) assoziierte Ereignisse auslösen kann.

8. System nach einem oder mehreren der vorherigen Ansprüche,
   **dadurch gekennzeichnet, dass**
   der Flächensensor (9) und/oder das Flächensensor beinhaltende Gerät (8) kapazitive Touchscreens und/oder Touchpads umfasst und ausgewählt ist aus der Gruppe umfassend Smartphones, Handys, Displays, Tablet-PCs, Tablet-Notebooks, Tochpad-Geräten, Grafiktabletts, Fernseher, PDAs, MP3-Player, Trackpads und kapazitive Eingabegeräte.

9.   System nach einem oder mehreren der vorherigen Ansprüche,
     **dadurch gekennzeichnet, dass**
     mindestens ein Informationsträger (1) mit mindestens einem Flächensensor (9) mindestens bereichsweise in Kontakt ist.

10.  System nach einem oder mehreren der vorherigen Ansprüche,
     **dadurch gekennzeichnet, dass**
     der Flächensensor (9) in einer Bewegung relativ zum Informationsträger (1) fortschreitend vollständig oder teilweise Informationen von dem Informationsträger (1) erhält.

11.  System nach einem oder mehreren der vorherigen Ansprüche,
     **dadurch gekennzeichnet, dass**
     mehrere Informationsträger (1) in Kombination, insbesondere nebeneinander und/oder übereinander und/oder zeitlich nacheinander, gelesen werden.

12.  Verwendung von mindestens einem Informationsträger (1) nach einem oder mehreren der vorherigen Ansprüche,
     **dadurch gekennzeichnet, dass**
     der Informationsträger (1) einem Datensatz in einem Datenverarbeitungssystem zugeordnet ist und der Datensatz konstant bleibt.

13.  Verwendung von mindestens einem Informationsträger (1) nach dem vorherigen Anspruch,
     **dadurch gekennzeichnet, dass**
     der Informationsträger (1) einem Datensatz in einem Datenverarbeitungssystem zugeordnet ist und sich der Datensatz verändert.

14.  Verwendung von mindestens einem Informationsträger (1) nach einem oder mehreren der vorherigen Ansprüche,
     **dadurch gekennzeichnet, dass**
     der Informationsträger (1) in Verbindung mit einem Flächensensor (9) über die Touch-Struktur (3) einer Aktion eines Datenverarbeitungssystem zugeordnet wird oder diese auslöst.

15.  Verfahren zur Erfassung von Informationen, umfassend

     a. Bereitstellung von mindestens einem kapazitiven Informationsträger (1), wobei dieser ein elektrisch nicht leitendes Substrat (2) aufweist, welches mindestens eine elektrisch leitfähige Touch-Struktur (3) umfasst und mindestens einen kapazitiven Flächensensor (9),
     b. In Kontakt bringen mindestens eines Informationsträgers (1) mit dem mindestens einen Flächensensor (9), wobei der Kontakt statisch und/oder dynamisch sein kann und
     c. Auslösen einer kapazitiven Wechselwirkung zwischen Flächensensor (9) und Informationsträger (1), wobei durch die kapazitive Wechselwirkung die Touch-Struktur (3) des Informationsträgers (1) für ein mit dem Flächensensor (9) verbundenem Datenverarbeitungssystem auswertbar wird und mit dem Informationsträger (1) assoziierte Ereignisse auslösen kann.

Fig. 1

Fig. 2

Fig. 3

Fig. 4

Fig. 5a

Fig. 5b

Fig. 6

Fig. 7

Fig. 8

Fig. 9

Fig. 10

Fig. 11

Fig. 12a

1

3

3

3

Fig. 12b

2

3

6

3

Fig. 13

Fig. 14

Fig. 15

Fig. 16

Fig. 17

Fig. 18

Fig. 19

Fig. 20a

Fig. 20b

Fig. 20c

Fig. 21

Datenverarbeitungssystem

Software                    Aktionen

Flächensensor

einfacher
Informationsträger

Fig. 22

Datenverarbeitungssystem

Datenverarbeitungssystem

Software     Aktionen

Flächensensor

einfacher
Informationsträger

Fig. 23

Datenverarbeitungssystem

Datenverarbeitungssystem

Software                    Aktionen

Flächensensor

einfacher
Informationsträger

Fig. 24

```
┌─────────────────────────────────────┐
│     Datenverarbeitungssystem         │
│                                      │
│              prüfen                  │
└─────────────────────────────────────┘

┌─────────────────────────────────────────┐
│     Datenverarbeitungssystem              │
│     ┌─────────────────────┐               │
│     │                     │               │
│     │      Software       │    Aktionen   │
│     │                     │               │
│     └─────────────────────┘               │
│         ┌─────────────────┐               │
│         │  Flächensensor  │               │
│         └─────────────────┘               │
└─────────────────────────────────────────┘

          ┌─────────────────┐
          │    signierter    │
          │  Informations-   │
          │     träger       │
          └─────────────────┘
```

Fig. 25

Datenverarbeitungssystem

entschlüsseln

Datenverarbeitungssystem

Software

Aktionen

Flächensensor

verschlüsselter
Informationsträger

Europäisches
Patentamt

European
Patent Office

Office européen
des brevets

**EUROPÄISCHER RECHERCHENBERICHT**

**Nummer der Anmeldung**

EP 10 07 5337

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 088 532 A1 (VOIGT SASCHA [DE]; THIELE JAN [DE]) 12. August 2009 (2009-08-12) * Absätze [0009] - [0016], [0022], [0028], [0032] - [0039], [0049], [0055]; Ansprüche 1,18 * ----- | 1-15 | INV. G06K19/067 G06K7/08 |

**RECHERCHIERTE SACHGEBIETE (IPC)**

G06K

Der vorliegende Recherchenbericht wurde für alle Patentansprüche erstellt

| Recherchenort | Abschlußdatum der Recherche | Prüfer |
|---|---|---|
| München | 13. Dezember 2010 | Koegler, Lutz |

**ANHANG ZUM EUROPÄISCHEN RECHERCHENBERICHT
ÜBER DIE EUROPÄISCHE PATENTANMELDUNG NR.**

EP 10 07 5337

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2010

| Im Recherchenbericht angeführtes Patentdokument | Datum der Veröffentlichung | Mitglied(er) der Patentfamilie | Datum der Veröffentlichung |
|---|---|---|---|
| EP 2088532 A1 | 12-08-2009 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1803562 A
- US 5818019 A
- US 3719804 A
- US 4587410 A
- US 20060118612 A